**Europäisches Patentamt**

**European Patent Office**

**Office européen des brevets**

(19)

(11) Veröffentlichungsnummer : **0 533 669 B1**

(12) # EUROPÄISCHE PATENTSCHRIFT

(45) Veröffentlichungstag der Patentschrift :
29.03.95 Patentblatt 95/13

(51) Int. Cl.$^6$ : **F16D 11/10, F16H 48/30**

(21) Anmeldenummer : **90910721.1**

(22) Anmeldetag : **07.07.90**

(86) Internationale Anmeldenummer :
**PCT/EP90/01099**

(87) Internationale Veröffentlichungsnummer :
**WO 91/01454 07.02.91 Gazette 91/04**

(54) **KLAUENKUPPLUNG MIT GROSSEM ABWEISWINKEL UND KLEINER HALTE- UND LÖSEKRAFT.**

(30) Priorität : **14.07.89 DE 3923217**

(43) Veröffentlichungstag der Anmeldung :
**31.03.93 Patentblatt 93/13**

(45) Bekanntmachung des Hinweises auf die
Patenterteilung :
**29.03.95 Patentblatt 95/13**

(84) Benannte Vertragsstaaten :
**DE GB IT**

(56) Entgegenhaltungen :
**DE-A- 3 633 514**
**DE-B- 1 178 262**
**GB-A- 738 458**
**US-A- 2 639 013**
**US-A- 2 887 201**
**US-A- 4 271 722**

(73) Patentinhaber : **ZF FRIEDRICHSHAFEN**
**Aktiengesellschaft**
**D-88038 Friedrichshafen (DE)**

(72) Erfinder : **FRIEDL, Reinhard**
**Brünnlweg 27 a**
**D-8391 Salzweg (DE)**
Erfinder : **WENDL, Harald**
**Stifterweg 9**
**D-8358 Vilshofen (DE)**
Erfinder : **SCHUSTER, Max**
**Bratfischwinkel 8**
**D-8390 Passau (DE)**

EP 0 533 669 B1

## Beschreibung

Die Erfindung betrifft eine Kupplung mit den Merkmalen nach dem Oberbegriff des Patentanspruches 1.

Eine Kupplung dieser Art läßt sich auch bei größtem Drehmoment mit einer kleinen Haltekraft geschlossen halten, bei jedem Drehmoment mit einer kleinen Lösekraft schnell und zuverlässig öffnen und bei kleinem Drehmoment und kleiner Relativdrehzahl schnell und zuverlässig schließen.

Die erste Forderung führt zu einem kleinen oder sogar negativen Abweiswinkel. Dann ist nur eine kleine oder gar keine Haltekraft an der beweglichen Hälfte nötig, um die Kupplung auch bei größtem Drehmoment geschlossen zu halten.

Die beiden anderen Forderungen führen zu einem großen Abweiswinkel. Wenn der Abweiswinkel groß genug ist, öffnet jedes Drehmoment selbsttätig über die Abweiskraft der Kuppelzähne schnell und zuverlässig die Kupplung, und eine Lösekaft an der beweglichen Hälfte ist überflüssig. Mit einem derart großen Abweiswinkel läßt sich die Kupplung bei kleinem Drehmoment und kleiner Relativdrehzahl auch leicht schließen, weil die Zahnlücken der Kuppelzähne dann so breit sind, daß die Zahnköpfe ihre Zahnlücken immer schnell und zuverlässig finden.

Ein Axiallager, das die axiale Haltekraft von einem äußeren Betätigungsglied unmittelbar auf die bewegliche Hälfte übertragen muß, bereitet Schwierigkeiten entweder durch seinen Verschleiß oder durch seine Baugröße, wenn man den Abweiswinkel über die bisher übliche Grenze hinaus vergrößern will, weil ein derart großer Abweiswinkel bei größtem Drehmoment eine sehr große Abweiskraft erzeugt.

Dies gilt auch für eine bekannte Klauenkupplung nach der DE-A 19 30 668.

Aus der DE-B 11 78 262 ist eine Kupplung nach dem Gattungsbegriff bekanntgeworden, bei der die Schiebehülse gegenüber der beweglichen Hälfte der Kupplung drehbar angeordnet ist. Hierdurch entsteht ein zusätzlicher Verschleiß an den Zwischengliedern und an der beweglichen Hälfte sowie der Schiebehülse.

Der vorliegenden Erfindung liegt, ausgehend von der aus der DE-B 11 78 262 bekannten Kupplung, die Aufgabe zugrunde, zusätzlichen Verschleiß zu verhindern. Die gestellte Aufgabe wird mit den Merkmalen nach dem kennzeichnenden Teil des Anspruches 1 gelöst.

Anspruch 2 nennt mögliche Winkelbereiche für den Abweiswinkel der Kuppelzähne, für den Keilwinkel zwischen der Stützfläche der beweglichen Hälfte und der axial festen Haltefläche und für einen Lösewinkel der Sperrfläche der Schiebehülse. Durch den Lösewinkel der Sperrfläche liefert das Drehmoment der Kupplung über die axiale Abweiskraft der Kuppelzähne und die radiale Kraft der Zwischenglieder einen Beitrag zur Lösekraft an der Schiebehülse.

Anspruch 3 nennt bevorzugte Winkelbereiche für die drei Winkel nach Anspruch 2.

Anspruch 4 nennt Merkmale eines bevorzugten Ausführungsbeispieles, bei dem die Abweiskraft der Kuppelzähne nur die Bauteile der Kupplung belastet.

Anspruch 5 nennt Merkmale eines Differentialgetriebes für ein Fahrzeug, bei dem die Kupplung nach der Erfindung verwendet wird.

Ansprüche 6 und 7 nennen bevorzugte Anordnungsbeispiele für eine Kupplung nach der Erfindung bei dem Differentialgetriebe nach Anspruch 5.

Ansprüche 8 und 9 nennen weitere bevorzugte Ausführungsbeispiele.

Die Merkmale der Ansprüche 5 bis 9 sind teilweise an sich bekannt, aber nicht in Verbindung mit den Merkmalen des Anspruches 1.

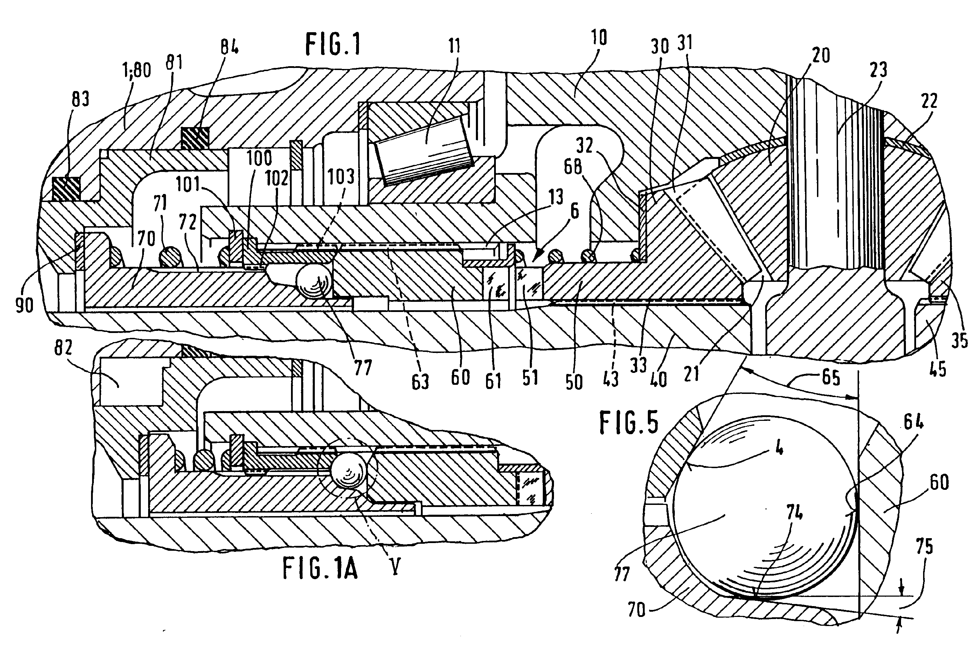

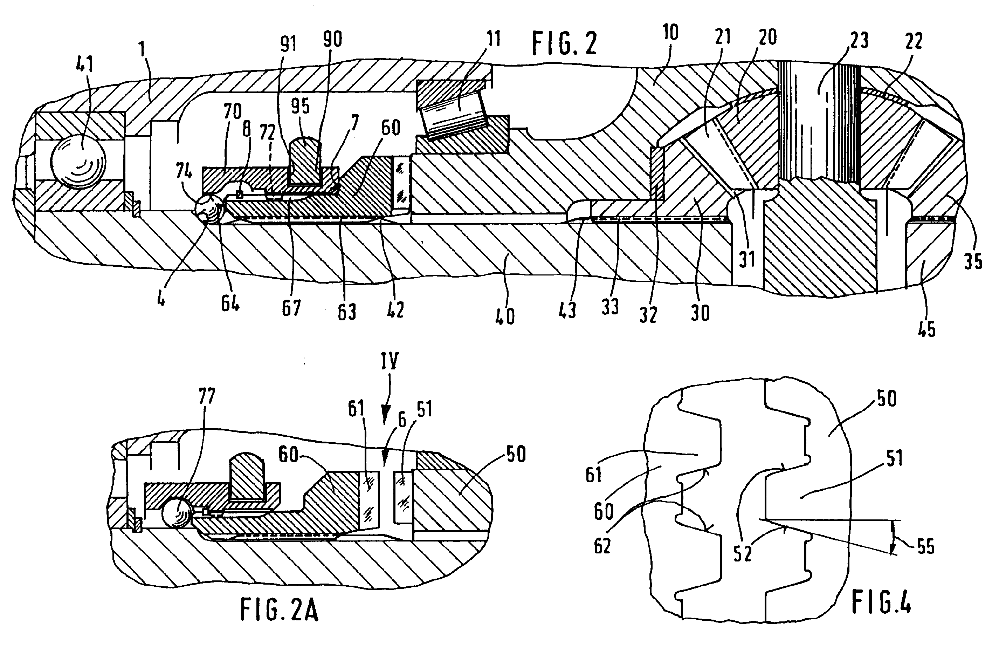

Die Zeichnung zeigt drei verschiedene Ausführungsbeispiele nach der Erfindung. Fig. 1, 1A, 2, 2A, 3 und 3A zeigen Ausschnitte aus Längsschnitten durch Differentialgetriebe mit Kupplungen nach der Erfindung. Fig. 4 zeigt einen Ausschnitt aus einer Draufsicht auf Kuppelzähne nach der Erfindung in größerem Maßstab. Fig. 5 zeigt einen Ausschnitt aus Fig. 1A in größerem Maßstab. Im einzelnen zeigen:

Fig. 1 und 1A      eine Kupplung, offen und geschlossen, nach den Ansprüchen 1, 3 und 8;

Fig. 2 und 2A      eine Kupplung, geschlossen und offen, nach den Ansprüchen 1, 3 und 9;

Fig. 3 und 3A      eine Kupplung, offen und geschlossen, nach den Ansprüchen 1, 3, 4, 5 und 6;

Fig. 4      die Kuppelzähne bei offener Kupplung und

Fig. 5      eine Kugel als Zwischenglied bei geschlossener Kupplung.

Fig. 1 bis 3: Ein Planetenträger 10 ist in zwei Planetenträgerlagern 11 in einem Gehäuse 1 gelagert. Der Planetenträger 10 treibt über Planetenräder 20 zwei Zentralräder 30, 35. Die Planetenräder 20 und die Zentralräder 30, 35 sind Kegelzahnräder mit Kegelzähnen 21, 31. Die Planetenräder 20 sind radial auf Planetenachsen 23 und axial in kugeligen Lagerschalen 22 in dem Planetenträger 10 gelagert. Die Zentralräder 30, 35 sind axial gegen ebene Anlaufscheiben 32 in dem Planetenträger 10 gelagert und radial in dem Planetenträger 10 geführt, unter Last aber im wesentlichen durch die Kegelzähne 21, 31 zentriert. Jedes Zentralrad 30, 35 ist über radiale Mitnahmezähne 33, 43 drehfest mit einer Achswelle 40, 45 verbunden und treibt über diese Achswelle 40, 45 ein nicht gezeigtes Antriebsrad auf einer Antriebsachse eines Fahrzeugs.

Fig. 1: Ein Zentralrad 30 trägt axial gegenüber den Kegelzähnen 31 axiale Kuppelzähne 51 und bildet damit eine axial feste Hälfte 50 einer Kupplung 6. Eine axial bewegliche Hälfte 60 der Kupplung 6 ist über radiale Mitnahmezähne 13, 63 drehfest in dem Planetenträger 10 angeordnet und trägt ebenfalls axiale Kuppelzähne 61.

Fig. 4: Mitnahmeflächen 52, 62 der Kuppelzähne 51, 61 der festen Hälfte 50 und der beweglichen Hälfte 60 sind mit einem Abweiswinkel 55 zur Achsrichtung geneigt, derart, daß ein Drehmoment eine axiale Abweiskraft erzeugt, die die Kupplung 6 öffnen will.

Fig. 1: Radiale Mitnahmezähne 13, 103 und ein Sicherungsring 101 halten einen Haltering 100 mit einer axial festen Haltefläche 4 fest in dem Planetenträger 10. Die bewegliche Hälfte 60 hat axial gegenüber den Kuppelzähnen 61 eine Stützfläche 64. Radiale Mitnahmezähne 72, 102 verbinden eine zu der beweglichen Hälfte 60 axial bewegliche Schiebehülse 70 drehfest mit dem Haltering 100 und damit auch drehfest mit dem Planetenträger 10 und der beweglichen Hälfte 60. Die Schiebehülse 70 schiebt über am Umfang verteilte Zwischenglieder 77 die bewegliche Hälfte 60 gegen die feste Hälfte 50, schließt damit die Kupplung 6 und hält dann mit einer im wesentlichen zylindrischen Sperrfläche 74 die Zwischenglieder 77 zwischen der Stützfläche 64 der beweglichen Hälfte 60 und der axial festen Haltefläche 4 des Halteringes 100 in einer Sperrlage fest.

Fig. 1A, 2, 3A und 5: Die Stützfläche 64 und die Haltefläche 4 bilden einen Keilwinkel 65 derart, daß die axiale Abweiskraft der Kuppelzähne 51, 61 eine radiale Kraft erzeugt, die die Zwischenglieder 77 gegen die Sperrfläche 74 der Schiebehülse 70 drückt. Die Sperrfläche 74 der Schiebehülse 70 ist mit einem kleinen Lösewinkel 75 zur Achsrichtung geneigt, derart, daß die radiale Kraft der Zwischenglieder 77 die Schiebehülse 70 mit geringer axialer Kraft in öffnungsrichtung schieben will.

Fig. 1 und 1A: Das Gehäuse 1 bildet einen Ringzylinder 80 für einen Ringkolben 81. Dichtringe 83, 84 dichten den Ringkolben 81 gegen den Ringzylinder 80. Ein Sicherungsring 86 begrenzt einen Hub des Ringkolbens 81. Druckfluid in einer Kammer 82 zwischen dem Ringkolben 81 und dem Ringzylinder 80 schiebt den Ringkolben 81 über ein Axiallager 90 gegen die Schiebehülse 70, um die Kupplung 6 zu schließen. Eine Feder 71 zwischen der Schiebehülse 70 und dem Planetenträger 10 schiebt die Schiebehülse 70 und über das Axiallager 90 den Ringkolben 81 wieder zurück. Die Abweiskraft der Kuppelzähne 51, 61 schiebt dann die bewegliche Hälfte 60 aus der festen Hälfte 50 hinaus und drückt dabei auch die Zwischenglieder 77 radial aus ihrer Sperrlage hinaus. Damit öffnet im wesentlichen das Drehmoment über die Abweiskraft die Kupplung 6. Dabei hilft eine Feder 68 zwischen der beweglichen Hälfte 60 und der am Planetenträger 10 befestigten Anlaufscheibe 32. Die Feder 68 hält dann die bewegliche Hälfte 60 von der festen Hälfte 50 entfernt und hält damit die Kupplung 6 offen.

Fig. 2 und 2A: Die Achswelle 40 ist in einem Achswellenlager 41 axial fest in dem Gehäuse 1 gelagert. Der Planetenträger 10 trägt axial außen axiale Kuppelzähne 51 und bildet damit eine axial feste Hälfte 50 der Kupplung 6. Eine axial bewegliche Hälfte 60 der Kupplung 6 ist über radiale Mitnahmezähne 42, 63 drehfest auf der Achswelle 40 angeordnet und trägt ebenfalls axiale Kuppelzähne 61. Die Achswelle 40 bildet eine axial feste Haltefläche 4. Die bewegliche Hälfte 60 hat axial gegenüber den Kuppelzähnen 61 eine Stützfläche 64. Radiale Mitnahmezähne 67, 72 verbinden eine zu der beweglichen Hälfte 60 axial bewegliche Schiebehülse 70 drehfest mit der beweglichen Hälfte 60 und damit auch drehfest mit der Achswelle 40 und dem Zentralrad 30. Die Schiebehülse 70 ist axial begrenzt beweglich zwischen zwei Stirnflächen 7, 8 der beweglichen Hälfte 60. Die Schiebehülse 70 schiebt über Zwischenglieder 77 die bewegliche Hälfte 60 gegen die feste Hälfte 50, schließt damit die Kupplung 6 und hält dann mit einer im wesentlichen zylindrischen Sperrfläche 74 die Zwischenglieder 77 zwischen der Stützfläche 64 der beweglichen Hälfte 60 und der Haltefläche 4 der Achswelle 40 in einer Sperrlage fest.

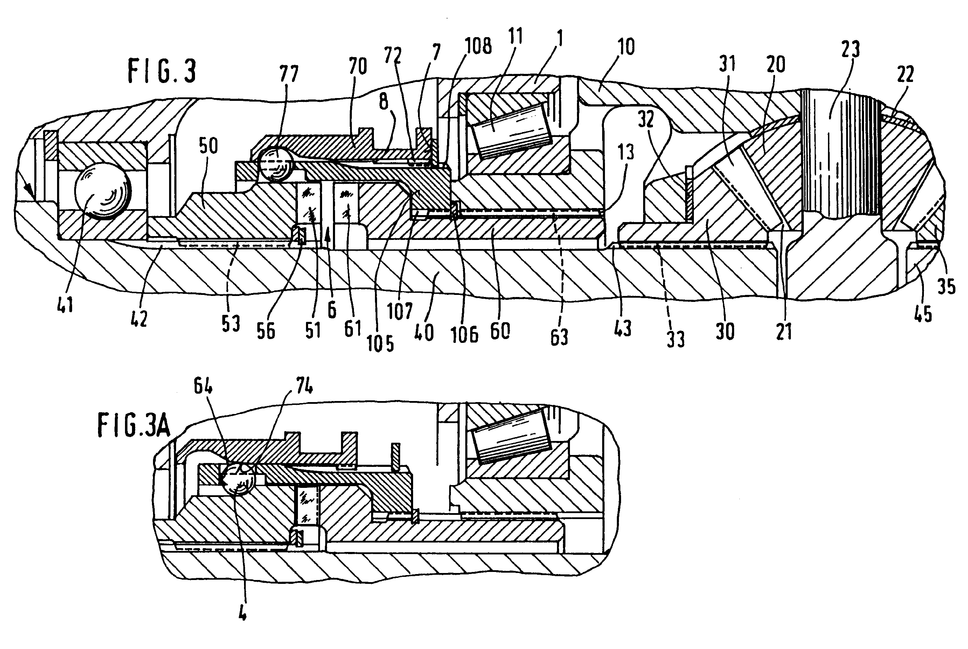

Fig. 2, 2A, 3 und 3A: In dem Gehäuse 1 ist eine Schaltgabel 95 geführt. Die Schaltgabel 95 drückt über ein erstes Axiallager 90 gegen die Schiebehülse 70, um die Kupplung 6 zu schließen. Die Schaltgabel 95 zieht über ein zweites Axiallager 91 die Schiebehülse 70 zurück. Die Abweiskraft der Kuppelzähne 51, 61 schiebt dann die bewegliche Hälfte 60 aus der festen Hälfte 50 hinaus und drückt dabei auch die Zwischenglieder 77 radial aus ihrer Sperrlage zwischen der Stützfläche 64 und der Haltefläche 4 hinaus. Damit öffnet im wesentlichen das Drehmoment über die Abweiskraft die Kupplung 6. Danach hält die Schaltgabel 95 über das zweite Axiallager 91, die Schiebehülse 70 und eine Stirnfläche 8 der beweglichen Hälfte 60 die bewegliche Hälfte 60 von der festen Hälfte 50 entfernt und damit die Kupplung 6 offen.

Fig. 3 und 3A: Die Achswelle 40 ist in einem Achswellenlager 41 axial fest in dem Gehäuse 1 gelagert. Eine axial feste Hälfte 50 einer Kupplung 6 ist über radiale Mitnahmezähne 42, 53 und einen Sicherungsring 56 fest mit der Achswelle 40 verbunden und bildet damit einen Teil der Achswelle 40. Die feste Hälfte 50 als Teil der Achswelle 40 trägt axiale Kuppelzähne 51. Eine axial bewegliche Hälfte 60 der Kupplung 6 ist über radiale Mitnahmezähne 13, 63 drehfest in dem Planetenträger 10 angeordnet und trägt ebenfalls axiale Kuppelzähne 61. Eine Verlängerung 105 ist über radiale Mitnahmezähne 63, 107 und einen Sicherungsring 106 fest mit der beweglichen Hälfte 60 verbunden und bildet damit einen Teil der beweglichen Hälfte 60. Die Verlängerung 105 als Teil der beweglichen Hälfte 60 bildet eine Stützfläche 64 der beweglichen Hälfte 60. Die feste Hälfte 50 als Teil der Achswelle 40 bildet eine axial feste Haltefläche 4. Radiale Mitnahmezähne 72, 108 verbinden eine zu der beweglichen Hälfte 60 axial bewegliche Schiebehülse 70 drehfest mit der Verlängerung 105 und damit auch drehfest mit der beweglichen Hälfte 60 und dem Planetenträger 10. Die Schiebehülse 70 ist axial begrenzt beweglich zu der beweglichen Hälfte 60 zwischen zwei Stirnflächen 7, 8 der Verlängerung 105. Die Schiebehülse 70 schiebt über Zwischenglieder 77, geführt in der Verlängerung 105, die bewegliche Hälfte 60 gegen die feste Hälfte 50, schließt damit die Kupplung 6 und hält dann mit einer im wesentlichen zylindrischen Sperrfläche 74 die Zwischenglieder 77 zwischen der Stützfläche 64 der beweglichen Hälfte 60 an der Verlängerung 105 und der axial festen Haltefläche 4 der festen Hälfte 50 auf der Achswelle 40 in einer Sperrlage fest.

Weitere sinnvolle Kombinationen von Merkmalen nach den Ansprüchen 1 bis 10 ergeben weitere Kupplungen nach der Erfindung, zum Beispiel eine Kombination der Merkmale der Ansprüche 1, 3, 4, 5 und 7.

Die Schaltgabel 95 kann eine Schiebegabel auf einer Schiebestange sein, wobei entweder die Schiebegabel auf der Schiebestange verschieblich und die Schiebestange in dem Gehäuse 1 befestigt oder die Schiebegabel auf der Schiebestange befestigt und die Schiebestange in dem Gehäuse 1 verschieblich sein kann. Die Schaltgabel 95 kann aber auch eine in dem Gehäuse 1 gelagerte Schwenkgabel sein, die an ihren Gabelenden Gleitsteine trägt, die mit zwei Stirnflächen der Schiebehülse 70 zwei Axiallager bilden.

Das Achswellenlager 41 kann ein beliebiges geeignetes Wälz- oder Gleitlager sein.

Anstelle eines Ringzylinders 80 mit einem Ringkolben 81 kann auch ein ringförmiger Elektromagnet mit einem ringförmigen Magnetanker die Kupplung schließen.

Die Kupplung 6 ist allgemein verwendbar, besonders als Sperrkupplung für Differentialgetriebe für Fahrzeuge.

Das Differentialgetriebe kann ein Querdifferentialgetriebe zum Verteilen einer Antriebskraft auf mindestens zwei Antriebsräder einer Antriebsachse oder ein Längsdifferentialgetriebe zum Verteilen der Antriebskraft auf mindestens zwei Antriebsachsen eines Fahrzeuges sein. Das Differentialgetriebe kann ein Kegelrad-Planetengetriebe oder ein Stirnrad-Planetengetriebe sein.

Die Zähnezahlen der Zentralräder können einander gleich oder ungleich sein. Das Differentialgetriebe kann damit die Antriebskraft gleichmäßig oder ungleichmäßig in einem festen Verhältnis verteilen.

Die äußere Kraft zum Bewegen der Schaltgabel kann eine Handkraft oder eine Kolbenkraft eines Fluidzylinders sein. Die bewegliche Hälfte 60 kann aus mehreren Teilen bestehen.

Bezugszeichen

| 1 | Gehäuse | gear case |
| 4 | Haltefläche | support face |
| 6 | Kupplung | clutch |
| 7 | Stirnfläche | face |
| 8 | Stirnfläche | face |
| 10 | Planetenträger | planet carrier |
| 11 | Planetenträgerlager | planet carrier bearing |
| 13 | Mitnahmezahn | spline |
| 20 | Planetenrad | planet |
| 21 | Kegelzahn | bevel gear tooth |
| 22 | Lagerschale | thrust shell |
| 23 | Planetenachse | planet axle |
| 30 | Zentralrad | central gear |
| 31 | Kegelzahn | bevel gear tooth |
| 32 | Anlaufscheibe | thrust plate |
| 33 | Mitnahmezahn | spline |
| 35 | Zentralrad | central gear |
| 40 | Achswelle | axle shaft |
| 41 | Achswellenlager | axle shaft bearing |
| 42 | Mitnahmezahn | spline |
| 43 | Mitnahmezahn | spline |
| 45 | Achswelle | axle shaft |
| 50 | Feste Hälfte | fixed claw |
| 51 | Kuppelzahn | clutch tooth |
| 52 | Mitnahmefläche | flank |
| 53 | Mitnahmezahn | spline |
| 55 | Abweiswinkel | rejecting angle |
| 56 | Sicherungsring | guard ring |
| 60 | Bewegliche Hälfte | sliding claw |
| 61 | Kuppelzahn | clutch tooth |
| 62 | Mitnahmefläche | flank |
| 63 | Mitnahmezahn | spline |

| 64 | Stützfläche | bearing face |
|---|---|---|
| 65 | Keilwinkel | wedge angle |
| 67 | Mitnahmezahn | spline |
| 68 | Feder | spring |
| 70 | Schiebehülse | sliding collar |
| 71 | Feder | spring |
| 72 | Mitnahmezahn | spline |
| 74 | Sperrfläche | locking surface |
| 75 | Lösewinkel | releasing angle |
| 77 | Zwischenglied | intermediate member |
| 80 | Ringzylinder | ring cylinder |
| 81 | Ringkolben | ring piston |
| 82 | Kammer | chamber |
| 83 | Dichtring | sealing |
| 84 | Dichtring | sealing |
| 86 | Sicherungsring | guard ring |
| 90 | Axiallager | axial bearing |
| 91 | Axiallager | axial bearing |
| 95 | Schaltgabel | shift fork |
| 100 | Haltering | support ring |
| 101 | Sicherungsring | guard ring |
| 102 | Mitnahmezahn | spline |
| 103 | Mitnahmezahn | spline |
| 105 | Verlängerung | prolongation |
| 106 | Sicherungsring | guard ring |
| 107 | Mitnahmezahn | spline |
| 108 | Mitnahmezahn | spline |

**Patentansprüche**

1.  Kupplung mit den Merkmalen:
    - die Kupplung (6) hat eine axial feste Hälfte (50) und eine axial bewegliche Hälfte (60);
    - die Hälften (50, 60) der Kupplung (6) tragen zueinander passende Kuppelzähne (51, 61);
    - Mitnahmeflächen (52, 62) der Kuppelzähne (51, 61) sind mit einem Abweiswinkel (55) zur Achsrichtung geneigt;
    - eine Schiebehülse (70) schiebt über am Umfang verteilte Zwischenglieder (77) die bewegliche Hälfte (60) gegen die feste Hälfte (50), schließt damit die Kupplung (6) und hält dann mit einer im wesentlichen axial verlaufenden Sperrfläche (74) jedes Zwischenglied (77) axial zwischen einer Stützfläche (64) der beweglichen Hälfte (60) und einer axial festen Haltefläche (4) in einer Sperrlage fest;
    - die Stützfläche (64) und die Haltefläche (4) bilden einen Keilwinkel (65), derart, daß bei geschlossener Kupplung (6) ein Drehmoment der Kupplung (6) über eine axiale Abweiskraft der Kuppelzähne (51, 61) an jedem Zwischenglied (77) eine radiale Kraft erzeugt, die das Zwischenglied (77) gegen

6

die Sperrfläche (74) drückt;
- wenn man die Schiebehülse (70) zurückbewegt und damit die Zwischenglieder (77) löst, öffnet das Drehmoment über die Abweiskraft die Kupplung (6),

**gekennzeichnet** durch das Merkmal: die Schiebehülse (70) ist über Formschluß drehfest mit der axial beweglichen Hälfte (60) verbunden.

2. Kupplung nach Anspruch 1, dadurch **gekennzeichnet,** daß sie folgende Merkmale aufweist:
- die Sperrfläche (74) ist mit einem Lösewinkel (75) zwischen 3 Grad und 12 Grad zur Achsrichtung geneigt;
- der Abweiswinkel (55) liegt zwischen 12 Grad und 35 Grad;
- der Keilwinkel (65) liegt zwischen 15 Grad und 45 Grad.

3. Kupplung nach Anspruch 2 mit den Merkmalen:
- der Lösewinkel (75) liegt zwischen 4 Grad und 7 Grad;
- der Abweiswinkel (55) liegt zwischen 15 Grad und 25 Grad;
- der Keilwinkel (65) liegt zwischen 20 Grad und 30 Grad.

4. Kupplung nach Anspruch 1, dadurch **gekennzeichnet,** daß sie folgende Merkmale aufweist:
- die feste Hälfte (50) trägt die Haltefläche (4);
- eine Verlängerung (105) der beweglichen Hälfte (60) übergreift die Kuppelzähne (51, 61) und die Haltefläche (4), führt die Zwischenglieder (77) und trägt die Stützfläche (64);
- die Sperrfläche (74) ist eine Innenfläche.

5. Kupplung nach Anspruch 1, dadurch **gekennzeichnet,** daß sie als Sperrvorrichtung in einem Planetengetriebe dient, das folgende Merkmale aufweist:
- das Planetengetriebe hat einen Planetenträger (10), zwei Zentralräder (30, 35) und mindestens ein Planetenrad (20);
- der Planetenträger treibt über das Planetenrad (20) und die Zentralräder (30, 35) zwei Achswellen (40, 45);
- die Kupplung (6) verbindet eine Achswelle (40) mit dem Planetenträger (10).

6. Kupplung nach Anspruch 4 und 5 mit den Merkmalen:
- die Achswelle (40) trägt die feste Hälfte (50);
- der Planetenträger (10) treibt die bewegliche Hälfte (60).

7. Kupplung nach Anspruch 4 und 5 mit den Merkmalen:
- der Planetenträger (10) trägt die feste Hälfte (50);
- die bewegliche Hälfte (60) treibt die Achswelle (40).

8. Kupplung nach Anspruch 5 mit den Merkmalen:
- ein Zentralrad (30) trägt die feste Hälfte (50);
- der Planetenträger (10) trägt die Haltefläche (4);
- der Planetenträger (10) treibt die bewegliche Hälfte (60) und die Schiebehülse (70);
- die Sperrfläche (74) ist eine Außenfläche.

9. Kupplung nach Anspruch 5 mit den Merkmalen:
- der Planetenträger (10) trägt die feste Hälfte (50);
- eine Achswelle (40) trägt die Haltefläche (4);
- die bewegliche Hälfte (60) treibt die Achswelle (40) und ‚die Schiebehülse (70);
- die Sperrfläche (74) ist eine Innenfläche.

**Claims**

1. Coupling having the features:
- the coupling (6) has an axially fixed half (50) and an axially movable half (60);
- the halves (50, 60) of the coupling (6) carry interlocking coupling teeth (51, 61);
- driving faces (52, 62) of the coupling teeth (51, 61) are inclined at an angle of deflection (55) relative to the axial direction;

- a sliding sleeve (70) slides the moving half (60) against the fixed half (50) via intermediate members (77) distributed over the circumference, thus closing the coupling (6), and then, with a substantially axially extending locking face (74), holds each intermediate member (77) firmly in a locked position axially between a supporting face (64) of the moving half (60) and an axially fixed retaining face (4);
- the supporting face (64) and the retaining face (4) form a wedge angle (65), such that when the coupling (6) is closed, a torque of the coupling (6) generates via an axial deflecting force of the coupling teeth (51, 61) on each intermediate member (77) a radial force, which pushes the intermediate member (77) against the locking face (74);
- if the sliding sleeve (70) is moved back so as to release the intermediate members (77), the torque opens the coupling (6) via the deflecting force,

characterised by the feature: the sliding sleeve (70) is non-rotatably connected by positive locking to the axially movable half (60).

2. Coupling according to claim 1, characterised in that it has the following features:
   - the locking face (74) is inclined at a release angle (75) of between 3 and 12 degrees to the axial direction;
   - the angle of deflection (55) is between 12 and 35 degrees;
   - the wedge angle (65) is between 15 and 45 degrees.

3. Coupling according to claim 2, having the features:
   - the release angle (75) is between 4 and 7 degrees;
   - the angle of deflection (55) is between 15 and 25 degrees;
   - the wedge angle (65) is between 20 and 30 degrees.

4. Coupling according to claim 1, characterised in that it has the following features:
   - the fixed half (50) comprises the retaining face (4);
   - an extension (105) of the movable half (60) overlaps the coupling teeth (51, 61) and the retaining face (4), guides the intermediate members (77) and carries the supporting face (64);
   - the locking face (74) is an inner face.

5. Coupling according to claim 1, characterised in that it acts as a locking device in a planetary gear, having the following features:
   - the planetary gear has a planet carrier (10), two central gears (30, 35) and at least one planet wheel (20);
   - the planet carrier drives two axle shafts (40, 45) via the planet wheel (20) and the central gears (30, 35);
   - the coupling (6) connects an axle shaft (40) to the planet carrier (10).

6. Coupling according to claim 4 and 5, having the features:
   - the axle shaft (40) carries the fixed half (50);
   - the planet carrier (10) drives the movable half (60).

7. Coupling according to claim 4 and 5, having the features:
   - the planet carrier (10) carries the fixed half (50);
   - the movable half (60) drives the axle shaft (40).

8. Coupling according to claim 5, having the features:
   - a central gear (30) carries the fixed half (50);
   - the planet carrier (10) carries the retaining face (4);
   - the planet carrier (10) drives the movable half (60) and the sliding sleeve (70);
   - the locking face (74) is an outer face.

9. Coupling according to claim 5, having the features:
   - the planet carrier (10) carries the fixed half (50);
   - an axle shaft (40) carries the retaining face (4);
   - the movable half (60) drives the axle shaft (40) and the sliding sleeve (70);
   - the locking face (74) is an inner face.

**Revendications**

1. Accouplement avec les caractéristiques:
   - l'accouplement (6) a une moitié fixe axiale (50) et une moitié axiale déplaçable (60);
   - les moitiés (50, 60) de l'embrayage (6) portent des dents d'accouplement adaptées (51, 61);
   - les faces d'entraînement (52, 62) des dents d'accouplement (51, 61) sont inclinées avec un angle de déflexion (55) vers la direction de l'axe;
   - un manchon coulissant (70) pousse sur les éléments intermédiaires distribués (77) sur la circonférence, la moitié mobile (60) contre la moitié fixe (50), fermant ainsi l'élément d'accouplement (6) et alors fixant avec une surface d'arrêt (74) essentiellement axiale chaque élément intermédiaire (77) de manière axiale entre une surface d'appui (64) de la moitié mobile (60) et une surface de support (4) axialement fixe dans une position d'arrêt;
   - la surface d'appui (64) et la surface de support (4) forment un angle conique (65), de telle manière que lorsque l'embrayage (6) est fermé, un couple de l'embrayage (6) fermé génère une force radiale par la force de chasse des dents de l'accouplement (51, 61) sur chaque élément intermédiaire (77), laquelle pousse l'élément intermédiaire (77) contre la surface d'arrêt (74);
   - quand on retire le manchon coulissant (70) et que l'on dessère les éléments intermédiaires (77), le couple ouvre l'accouplement (6) grâce à la force de chasse,
   **caractérisé** en ce que:
   le manchon coulissant (70) est arrêté contre la rotation avec la moitié axiale mobile (60) grâce à sa forme géométrique.

2. Accouplement selon revendication 1,
   **caractérisé** en ce qu'il présente les caractéristiques suivantes:
   - la surface d'arrêt (74) est inclinée avec un angle de déclenchement (75) entre 3 et 12 degrés vers la direction axiale;
   - l'angle de déflexion (55) se trouve entre 12 et 35 degrés;
   - l'angle conique (65) se trouve entre 15 et 45 degrés.

3. Accouplement selon revendication 2 avec les caractéristiques suivantes:
   - l'angle de déclenchement (75) se trouve entre 4 et 7 degrés;
   - l'angle de déflexion (55) se trouve entre 15 et 25 degrés;
   - l'angle conique (65) se trouve entre 20 et 30 degrés.

4. Accouplement selon revendication 1,
   **caractérisé** en ce qu'il présente les caractéristiques suivantes:
   - la moitié fixe (50) porte la surface de support (4);
   - un rallongement (105) de la moitié mobile (60) empiète sur les dents de l'accouplement (51, 61) et sur la surface de support (4), mène aux éléments intermédiaires (77) et porte la surface d'appui (64);
   - la surface d'arrêt (74) est une surface intérieure.

5. Accouplement selon la revendication 1,
   **caractérisé** en ce qu'il sert d'appareil d'arrêt dans une boîte à train planétaire présentant les caractéristiques suivantes:
   - la boîte à train planétaire possède un porte-satellites (10), deux planétaires (30, 35) et au moins un satellite (20);
   - le porte-satellites entraîne à travers le satellite (20) et les deux planétaires (30, 35), les deux arbres d'essieu (40, 45);
   - l'accouplement (6) lie un arbre d'essieu (40) avec le porte-satellites (10).

6. Accouplement selon revendications 4 et 5 avec les caractéristiques suivantes:
   - l'arbre d'essieu (40) porte la moitié fixe (50);
   - le porte-satellites (10) entraîne la moitié mobile (60).

7. Accouplement selon revendications 4 et 5 avec les caractéristiques suivantes:
   - le porte-satellites (10) porte la moitié fixe (50);
   - la moitié déplaçable (60) entraîne l'arbre d'essieu (40).

8. Accouplement selon revendication 5 avec les caractéristiques suivantes:

- un planétaire (30) porte la moitié fixe (50);
- le porte-satellites (10) porte la surface de maintien (4);
- le porte-satellites (10) entraîne la moitié mobile (60) et le manchon coulissant (70);
- la surface d'arrêt (74) est une surface extérieure.

9. Accouplement selon revendication 5 avec les caractéristiques suivantes:
   - le porte-satellites (10) porte la moitié fixe (50);
   - un arbre d'essieu (40) porte la surface d'appui (4);
   - la moitié mobile (60) entraîne l'arbre d'essieu (40) et le manchon coulissant (70);
   - la surface d'arrêt (74) est une surface intérieure.

FIG.1

FIG.1A

FIG.5

FIG.2

FIG.2A

FIG.4

FIG.3

FIG.3A